# EUROPEAN PATENT APPLICATION

(11) **EP 2 698 083 A1**
(43) Date of publication of application: **19.02.2014**
(21) Application number: 12180352.2
(22) Date of filing: 14.08.2012
(51) Int. Cl.: A47J 19/02

(54) **A masticating separator for separating fruit or vegetable juice from fruit or vegetable pulp**

(71) Applicant: Koninklijke Philips N.V., 5656 AE Eindhoven (NL)
(72) Inventor: Sauer, Stefan, 5600 AE Eindhoven (NL)
(74) Representative: Damen, Daniel Martijn

(57) **Abstract**

The present application relates to a masticating separator (100) for separating fruit or vegetable juice from fruit or vegetable pulp. The masticating separator has a body (101) with a base (104) configured to support the body on a horizontal surface, and an auger (102,222,271) rotatably mounted in the body about a rotational axis. The rotational axis of the auger is configured to extend at an oblique angle to the base. The present application also relates to a juicer for extracting fruit and or vegetable juice from pulp.

## Description

### FIELD OF THE INVENTION

The present invention relates to a masticating separator for separating fruit or vegetable juice from fruit or vegetable pulp. The present application also relates to a juicer for extracting fruit and or vegetable juice from pulp.

### BACKGROUND OF THE INVENTION

Juicers for foodstuffs, such as fruit or vegetables, are well known for separating juice from pulp. Such apparatus are highly popular because of their health and taste benefits. One of the main forms of juicer is a masticating juicer.

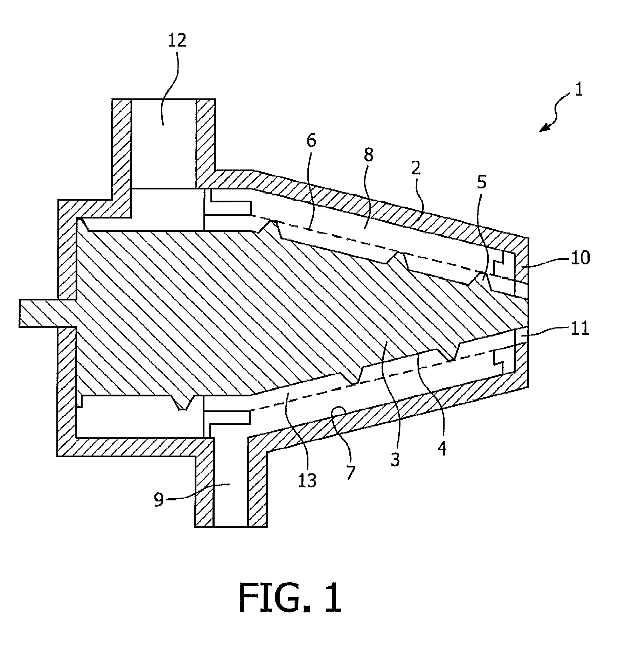

A masticating juicer is shown in Figure 1. Such a juicer 1 comprises a housing 2 with a motor driven auger 3 which is rotatably mounted in the housing 2. The auger 3 has an outer face 4 with a helical screw or blade 5 extending there around. A conically shaped sieve 6 is disposed in the housing 2 and is spaced from an inner surface 7 of the housing 2 to define a juice passageway 8 between the sieve 6 and the housing 7. A juice outlet 9 extends through the housing 2 from the juice passageway 8. The auger 3 is disposed in the sieve 6, and the auger 3 is rotatable in the sieve 6 about its longitudinal axis. One end 10 of the housing is open to form a pulp outlet 11 and a fruit or vegetable inlet 12 is formed through the housing 2 to allow fruit or vegetable to be inserted into the juicer.

When a user inserts a fruit or vegetable into the housing 2 though the inlet 12, the fruit or vegetable is received between the auger 3 and the inner surface 7 of the housing 2. The auger 3 is slowly rotated about its longitudinal axis by a manual handle or a motor (not shown), and the fruit or vegetable is crushed by the helical blade 5. The crushed fruit or vegetable is urged along the housing 2, towards the sieve 6. The pressure imparted on the crushed pulp and juice increases as it is urged along the housing due to the area of the chamber 13 formed between the conically shaped sieve 6 and auger 3 reducing as the sieve converges towards the open end 10 of the housing 2. Therefore, the juice is urged to flow through the holes formed in the sieve 6 into the juice passageway 8, and out through the juice outlet 9. The pulp is then ejected from the housing 2 at the open end 10 through the pulp outlet 11.

However, one problem with a masticating juicer is that it is difficult and time consuming for a user to clean. In particular, the fibres of the pulp get stuck in the perforations of the sieve and so a user has to brush the sieve by hand to clean it. Furthermore, it can be difficult to introduce fruit and/or vegetables into the housing to be crushed.

### SUMMARY OF THE INVENTION

Therefore, it is an object of the invention to provide a masticating separator for separating fruit or vegetable juice from fruit or vegetable pulp which substantially alleviates or overcomes the problems mentioned above.

According to embodiments of the invention, there is provided a masticating separator for separating fruit or vegetable juice from fruit or vegetable pulp comprising a body with a base configured to support the body on a horizontal surface, and an auger rotatably mounted in the body about a rotational axis, wherein the rotational axis of the auger is configured to extend at an oblique angle to the base.

With the above arrangement, it is possible to maximize the dimensions of the fruit or vegetable inlet. Furthermore, it is possible to provide a self-feeding arrangement for feeding fruit or vegetables to the auger without the need to urge the fruit or vegetable towards the auger. Another advantage of the rotational axis of the auger being disposed to extend at an oblique angle to the base is that it reduces the space required by the masticating separator.

An opening may be formed in a side wall of the body extending around the auger to act as a fruit or vegetable inlet so that a fruit or vegetable is feedable to the auger, and at least the portion of the side wall in which the opening is formed extends at an oblique angle to the rotational axis of the auger.

Therefore, the area of the opening is maximized.

The auger may comprise a chopping portion and a pressing portion.

Therefore, it is possible for the auger to chop a fruit or vegetable and to press the fruit or vegetable.

The opening may be configured to face the chopping portion.

Therefore, the fruit or vegetable fed through the opening is guided to the chopping portion.

The body may further comprise an elongate passage configured to feed a fruit or vegetable to the opening and the longitudinal axis of the elongate passage may extend at an oblique angle to the rotational axis of the auger.

A cutting edge of the chopping portion may extend at an oblique angle to the rotational axis of the auger.

The base may be defined by a base surface.

The base may be defined by two or more surface portions which are spaced from each other. The base surfaces may be feet.

The body may comprise a base unit defining the base and a housing mountable to the base unit.

The auger may be received in a chamber formed by the housing.

The chamber may be elongate and may converge towards each end of the housing.

The housing may comprise first and second portions which are separable from each other.

The above arrangement allows the housing and auger to be easily cleaned.

The first portion may have a juice outlet, and the second portion may have a sieve configured to extend over the juice outlet when the first and second portions are mounted to each other.

The above arrangement enables the sieve to be easily cleaned.

The masticating separator may further comprise an inner wall in the body, a cavity defined between an outer surface of the auger and the inner wall to receive pulp and juice, and a juice passageway separated from the cavity, wherein an elongate aperture is formed in the inner wall which extends between the cavity and the juice passageway so that, when the auger is rotated about its longitudinal axis to urge pulp and juice along the cavity, juice in the cavity is urged to flow through the aperture to the juice passageway.

The above arrangement enables juice to be extracted from a fruit or vegetable pulp without the need for a sieve. This simplifies the arrangement of a masticating separator and makes a masticating separator easier to clean.

The elongate aperture may extend circumferentially around the inner wall.

Therefore, the flow of juice from the chamber is possible all the way around the body.

The inner wall may comprise a first part and a second part, the first and second parts being separable along the aperture.

The effect of this arrangement is that it enables the aperture to be easily cleaned, and prevents fibres from becoming trapped in the aperture.

The first and/or second parts may be removably received in the housing.

This arrangement aids cleaning of the inner wall and the aperture by improving accessibility.

The inner wall may be conically shaped.

The effect of this arrangement is to produce a pressure increase along the cavity.

A pulp outlet may be formed at one end of the housing and the auger may be configured to urge pulp and juice towards said pulp outlet.

One advantage of this arrangement is that pulp is easily guided from the chamber.

The aperture may be spaced from the pulp outlet.

An effect of this arrangement is to ensure a good juice extraction efficiency.

The aperture may be disposed proximate an opposing end of the inner wall to the pulp outlet.

An advantage of this arrangement is to ensure that the maximum quantity of juice is extracted from the pulp.

In another embodiment, the second part may be integrally formed with the housing.

The second part being integrally formed with the housing may reduce the number of components, and simplify assembly of the masticating separator.

The first part may have an end face which is spaced from an opposing end face of the second part to form the aperture.

An advantage of the above arrangement is that assembly of the masticating separator is simplified.

The masticating separator may further comprise a spacer means configured to space the end face of the first part from the opposing end face of the second part.

One advantage of this arrangement is that it ensures that a consistent aperture gap is maintained.

The spacer means may protrude from one of the opposing end faces and may locate against the opposing end face to space the first part from the second part. Therefore, a consistent aperture gap may be formed between the opposing end faces.

The juice passageway may be formed between the inner wall and the housing.

According to another aspect of embodiments of the invention, there is provided a juicer for extracting fruit and or vegetable juice from pulp comprising a masticating separator. Embodiments of the invention could also be applied in relation to a soymilk maker, wherein the soymilk maker comprises a masticating separator for separating soy milk from soy pulp comprising a body with a base configured to support the body on a horizontal surface, and an auger rotatably mounted in the body about a rotational axis, wherein the rotational axis of the auger is configured to extend at an oblique angle to the base.

Embodiments of the invention relating to juicers may also be applicable in the field of soy milk making.

These and other aspects of the invention will be apparent from and elucidated with reference to embodiments described hereinafter.

### BRIEF DESCRIPTION OF THE DRAWINGS

Embodiments of the invention will now be described, by way of example only, with reference to the accompanying drawings, in which:
Figure 1 shows an illustrative cross-sectional view of a conventional masticating separator for separating a fruit or vegetable juice from a pulp;
Figure 2 shows an illustrative perspective view of a masticating separator for separating a fruit or vegetable juice from a pulp;
Figure 3 shows an exploded illustrative perspective view of the masticating separator shown in Figure 2;
Figure 4 shows a partial cut-away illustrative perspective view of a housing of the masticating separator shown in Figure 2 with the auger removed; and
Figure 5 shows an illustrative cross-sectional side view of the masticating separator shown in Figure 2.
Figure 6 shows an illustrative cross-sectional view of another embodiment of a masticating separator for separating a fruit or vegetable juice from a pulp;
Figure 7 shows an illustrative cross-sectional view of another embodiment of a masticating separator for separating a fruit or vegetable juice from a pulp; and
Figure 8 shows an illustrative cross-sectional view of another embodiment of a masticating separator for separating a fruit or vegetable juice from a pulp.

### DETAILED DESCRIPTION OF THE EMBODIMENTS

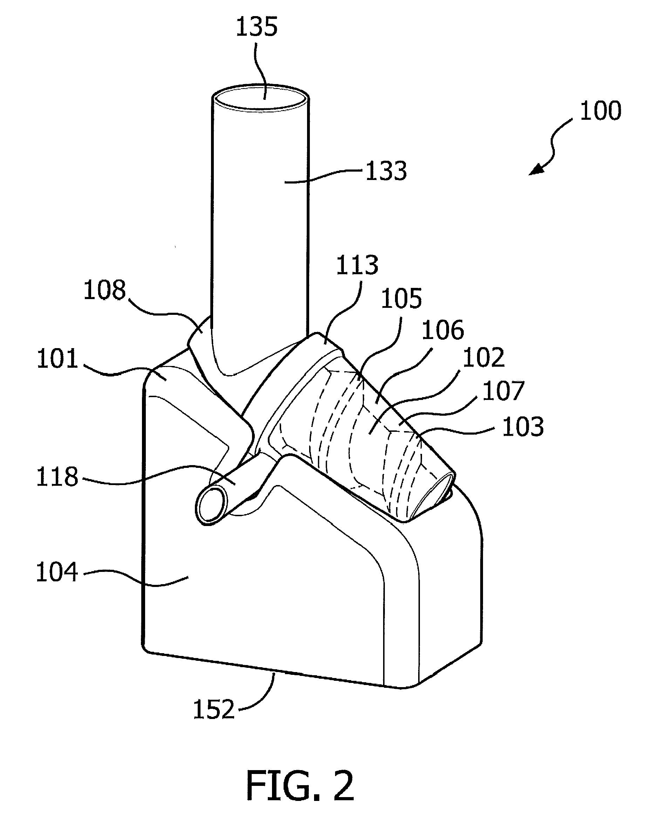

Referring now to Figures 2 to 5, a masticating separator 100 acting as a masticating juicer for separating fruit or vegetable juice from pulp is shown. The masticating separator comprises a body 101 and a rotatable auger 102 disposed in the body 101. The body 101 includes a housing 103 and a base unit 104. The rotatable auger 102 is received in the housing 103 and is rotatable therein. The housing 103 is removably mounted to the base unit 104. The base unit 104 supports the housing 103 and also orientates the housing 103 in its correct orientation for operation. Although the base unit 104 and housing 103 are two separable parts in the present arrangement, it will be understood that the base unit 104 and at least part of the housing 103 may be integrally formed. One advantage of the housing 103 being removable from the base unit 104 is that the housing 103 may be easily cleaned. Furthermore, removal and positioning of the auger 102 in the housing 103 is simplified.

The housing 102 of the body 101 comprises an outer shell 105 and a chamber 106. The chamber 106 is formed in the housing 102 to receive the rotatable auger 103. The housing 102 has a front portion 107 and a rear portion 108. The front and rear portions 107, 108 are separable from each other. An engagement arrangement 113 releasably mounts the front and rear portions 107, 108 to each other. The engagement arrangement 113 forms a fluid seal between the two portions 107, 108.

The front and rear portions 107, 108 of the housing 102 are separable to allow access to the chamber 106. Therefore, the auger 102 is removable from the housing 102 for cleaning, as will become apparent hereinafter.

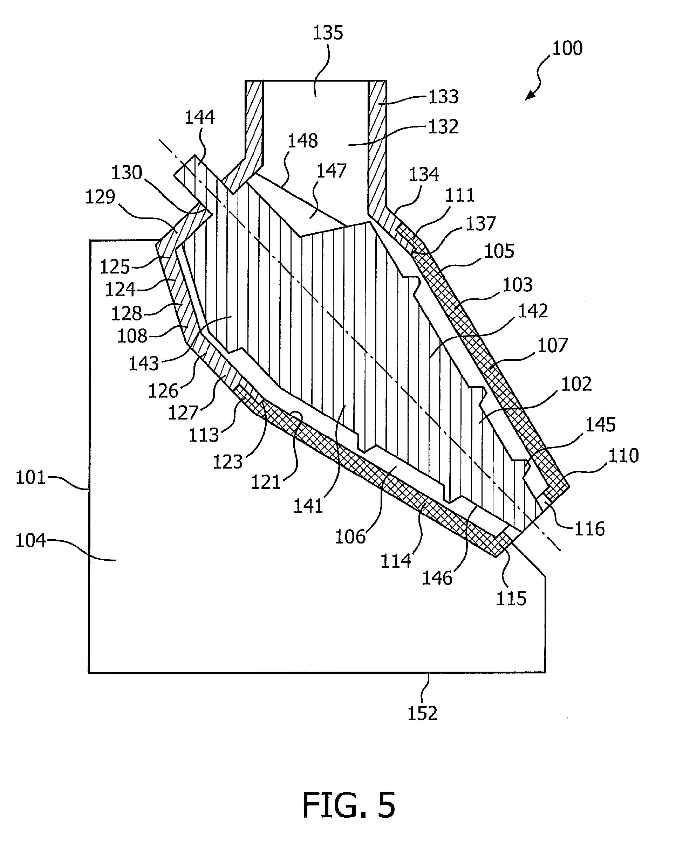

The front portion 107 of the housing 102 is generally conical. The front portion 107 comprises a conical section 109 extending substantially from a front end 110 to a rear end 111. A cylindrical section 112 is formed at the rear end 111 of the front portion 107. A side wall 114 of the front portion 107 converges from the rear end 111 to the front end 110. A front end wall 115 is formed at the front end 110. An aperture (refer to Figure 5) is formed through the front end wall 115 to form a pulp outlet 116 through which pulp is discarded from the housing 102, as will become apparent hereinafter. With the pulp outlet 116, the front end 110 is open and communicates between the chamber 106 and outside the housing 102. The side wall 114 of the front portion 107 forms the front side wall of the housing 102.

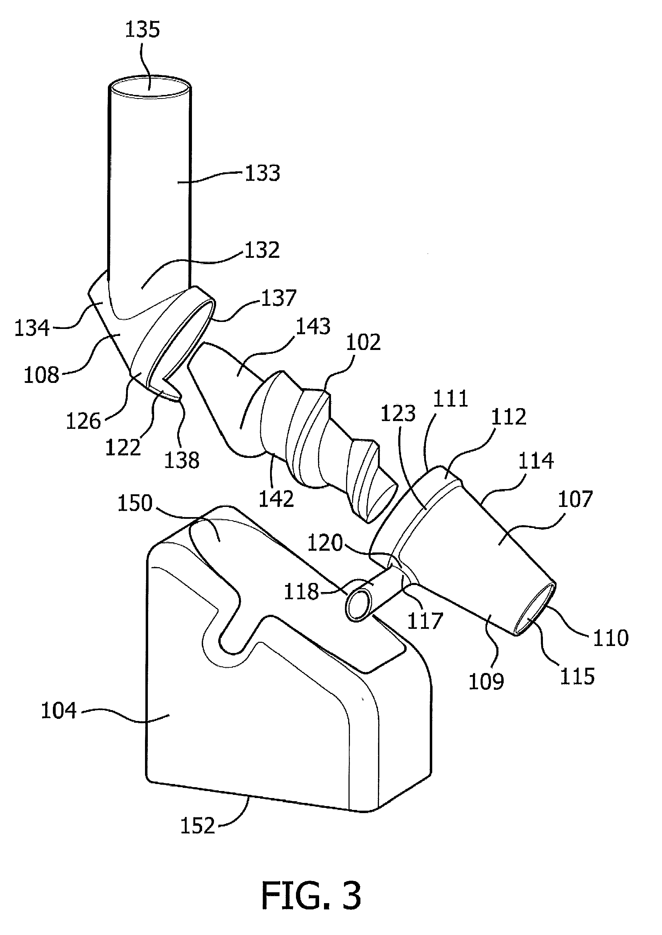

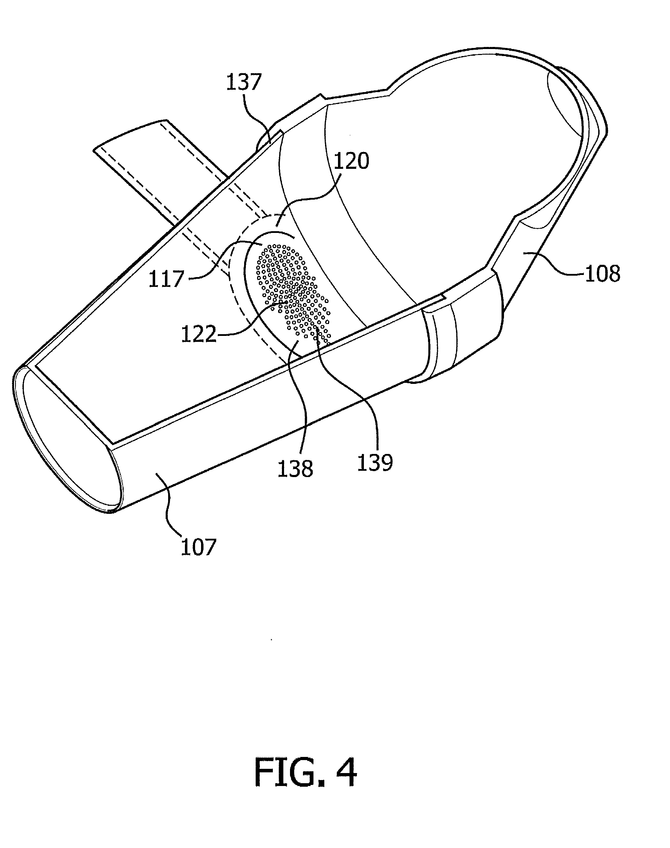

Referring in particular to Figures 3 and 4, an opening 117, acting as a juice outlet, is formed through the front side wall 114. A pipe 118 extends from the opening 117. Therefore, juice flowing through the juice outlet 117 from the chamber 106 is guided by the pipe 118. The pipe 118 is open at its free end so that juice flowing along the pipe 118 is able to flow into a container (not shown).

A recess 120 is formed in an inner surface 121 of the front side wall of the housing 102. The recess 120 extends around the juice outlet 117. The bottom surface of the recess 120 is concave. The bottom surface slopes towards the juice outlet 117. The recess 120 is configured to receive a sieve 122, as will become apparent hereinafter.

The cylindrical section 112 of the front portion 107 extends from the rear end of the conical section 109. A step 123 is formed in the inner surface 121 of the front side wall 114 of the housing 102. The step 123 extends circumferentially around the inner surface 121 of the front side wall 114. The edge of the recess 120 extends to the step 123 formed in the inner surface 121 of the housing front portion 107. That is, in the present embodiment the recess 120 extends to and communicates with a lip of the conical section 109 of the front portion 107.

The rear portion 108 of the housing 102 is generally conical. The rear portion 108 comprises a conical section 124 extending substantially from a rear end 125 to a front end 126. A cylindrical section 127 is formed at the front end 126 of the rear portion 108. A side wall 128 of the rear portion 108 converges from the front end 126 to the rear end 125. Therefore, the housing 102 converges towards each of its front and rear ends. A rear end wall 129 is formed at the rear end 125. A shaft-receiving aperture 130 (refer to Figure 5) is formed through the rear end wall 129. The side wall 128 of the rear portion 108 forms the rear side wall of the housing 102. That is, the front side wall 114 and the rear side wall 128 together form the side wall of the housing 102.

An opening 132 is formed in the rear side wall 128 of the rear portion 108. The opening 132 acts as a fruit and/or vegetable inlet. A tube 133 upstands from an outer surface 134 of the housing 102 and extends around the opening 132. The tube 133 forms part of the fruit and/or vegetable inlet and acts as a passage 135 which communicates with the chamber 106. Therefore, a fruit or vegetable fed into the passage 135 is fed into the chamber 106. The passage 135 is elongate and has a longitudinal axis.

The cylindrical section 127 of the rear portion 108 extends from the conical section 123. The cylindrical section 127 has a rim 137 which extends circumferentially around the rear portion 108.

The sieve 122 protrudes from the rim 137. The sieve 122 is formed by a panel 138 with a plurality of sieve apertures 139 formed there through. The panel 138 is arcuate and corresponds to the arc of the inner surface of the 121 of the front side wall 114. The sieve apertures 139 extend between an outer side and inner side of the panel 138. The sieve apertures 139 are sized to allow juice to flow through the apertures 139, but to prevent the flow of pulp there through. The sieve apertures 139 are configured so that pulp fibres collate at the inner side of the panel 138 to obstruct the sieve apertures 139. The juice is then filtered through the pulp fibres collated at the inner side of the panel 138, and passes through the sieve apertures, to create a cake filtration process. This means that it is possible for the diameter of the holes to be maximized because the collated pulp fibres themselves act as a filter. Therefore, the efficiency of the juice filtration is maximized and it is easier to clean the sieve 122.

When the front and rear portions are brought together, the rim 137 of the front end 126 of the housing rear portion 108 is received in the rear end 111 of the housing front portion 107. The rim 137 abuts the step 123 formed in the inner surface 121 of the front side wall 114 of the housing 102. Furthermore, the cylindrical section 112 of the front portion 107 overlaps the cylindrical section 127 of the rear portion 108 to form the engagement arrangement 113. Therefore, the front and rear portions 107, 108 engage with each other and a fluid seal is formed there between.

As the front and rear portions 107, 108 are brought together the sieve 122 is received by the front portion 107, and is received in the recess 120 formed in the inner surface 121 of the front side wall of the housing 102. The sieve 122 extends over the juice outlet 117. An outer edge of the sieve 122 locates against an outer edge of the recess 120. As the bottom surface of the recess 120 is concave, the outer face of the sieve is spaced from the bottom surface extending around the juice outlet 117. Therefore, the size of the sieve 122 is able to exceed the dimensions of the juice outlet 117. A fluid passageway is defined from the sieve 122 to outside the housing 103.

The auger 102 has an auger body 141 with a pressing portion 142 and a chopping portion 143. A shaft 144 extends from a rear end of the auger body 141. The shaft 144 is integrally formed with the auger body 141 and extends along the longitudinal axis of the auger 102. The auger 102 is configured to rotate about its longitudinal axis. The pressing portion 142 is conical and converges from a rear end to a front end. A helical screw or blade 145 extends around an outer surface 146 of the pressing portion 142 from the rear end to the front end. The chopping portion 143 extends from the rear end of the pressing portion 142. The chopping portion 143 has a chopping element 147, for example a blade. The chopping element 147 has a cutting edge 148. The cutting edge 148 extends at an oblique angle to the rotational axis of the auger 102.

The shaft 144 is configured to be rotatably driven by a motor (not shown) disposed in the base unit 104. The shaft 144 is connected to the shaft 144 by a drive mechanism (not shown). Therefore, the auger 102 is rotated when the motor is operated. In the present embodiment a free edge of the helical blade 145 is spaced equidistant from the outer surface 146 of the auger body 141 along its length, however it will be appreciated that the height of the blade 145 may vary along its length.

The base unit 104 contains the motor (not shown) and other components for operating the masticating separator. The base unit 104 has a holder 150 for supporting the housing 103. The holder 150 is disposed at an upper end of the base unit 104. The holder 150 in the present embodiment is a recess formed in the base unit 104. The holder 150 is configured to partially receive the housing 103 so that the housing 103 is orientated in a defined position with respect to the base unit 104. Therefore, when the housing 103 is received by the holder 150, the housing 103 and base unit 104 are orientated in a predetermined position with respect to each other. The pipe 118 is received in an extended portion of the holder 150. The pipe 118 locates against the base unit 104 to orientate the housing 103 with respect to the base unit 104 about its longitudinal axis. The free end of the pipe 118 protrudes from the base unit 104.

The base unit 104 defines a base. The base is configured to support the body 101 on a horizontal surface. The base defines a base plane. That is, the base plane is a plane which is configured to extend co-planer with the plane of a horizontal surface when the body 101 of the masticating separator 100 is positioned on the horizontal surface.

In the present embodiment the base unit 104 has a base surface 152. The base surface 152 is configured to be positioned against a horizontal surface when the body 101 of the masticating separator 100 is positioned on the horizontal surface. In the present embodiment, the base surface 152 defines the base.

It will be understood that the base surface 152 may be defined by two or more surface portions which are spaced from each other. For example, the base unit 104 may have feet which are configured to support the body 101 on a horizontal surface. In such an arrangement it will be understood that the lower face of the feet form the surface portions of the base surface. Therefore, the lower face of the feet may together define the base.

When the masticating separator 100 is assembled, the auger 102 is received in the housing 103. The auger 102 is inserted into one or both of the front and rear portions 107, 108 and the front and rear portions are brought together. When the auger 102 is received in the housing 103, the shaft 144 protrudes through the shaft-receiving aperture 130 formed through the rear end wall 129 of the housing 103 so that it is engagable with the drive mechanism (not shown). The front end of the auger 102 extends to the pulp outlet 116. The longitudinal axis of the auger 102 extends co-axial with the longitudinal axis of the housing 103. The pressing portion 142 is received in the front portion 107 of the housing 103. The chopping portion 143 is received in the rear portion 108 of the housing 103.

When the auger 102 and housing 103 are assembled together, the opening 132 formed in the rear side wall 128 of the rear portion 108, and acting as a fruit and/or vegetable inlet, opposes the chopping portion 143 of the auger 102. The longitudinal axis of the passage 135 intersects the chopping portion 143 of the auger 102. Therefore, when fruit or vegetables are fed through the opening 132 into the chamber 106, they are fed directly to the chopping portion 143.

When the front and rear portions 107, 108 are brought together the sieve 122 is aligned with, and received in, the front portion 107, and is received in the recess 120 formed in the inner surface 121 of the front side wall of the housing 102. Therefore, the sieve 122 and the recess 120 orientate the front and rear portions 107, 108 with respect to each other. The pipe 118, acting as the juice outlet, is orientated with respect to the opening 132 and therefore the passage 135 extending from the opening 132.

When the auger 102 is assembled with the housing 103, the rotational axis of the auger, which corresponds to the longitudinal axis of the auger, extends at an oblique angle to the rear side wall 128 of the rear portion 108. That is, the rear side wall 128 of the rear portion 108 is neither perpendicular nor parallel to the rotational axis of the auger. Therefore, it will be understood that the opening extends at an oblique angle to the rotational axis of the auger.

Furthermore, the longitudinal axis of the passage 135 extending from the opening 132 extends at an oblique angle to the longitudinal axis of the auger 102.

In the present embodiment, the longitudinal axis of the passage 135 extends at an angle of 60 degrees to the rotational axis of the auger 102. However, the angle between the longitudinal axis of the passage 135 and the rotational axis of the auger 102 may be in the range of 15 degrees to 80 degrees.

One advantage of at least the portion of the side wall 128 in which the opening 132 is formed extending at an oblique angle to the rotational axis of the auger is that the area of the opening 132 is maximized. Therefore, the area of the opening 132 and the area of the passage 135 are maximized. This allows easier insertion of fruit and/or vegetables.

With the auger 102 described above, the chopping element 147 has a conical arrangement. The chopping element 147 is received in the conical rear portion 108 of the housing 102. Therefore, the cutting edge 148 of the chopping portion 143 extends at an oblique angle to the rotational axis of the auger 102. That is, the cutting edge 148 is neither perpendicular nor parallel to the rotational axis of the auger 102. With the chopping portion 143 being implemented as a conical arrangement as described above, fruit or vegetables fed into the chamber 106 are sliced by the cutting edge 148 and are urged towards the pressing portion 142 of the auger. Therefore, the masticating separator 101 is self-feeding and does not require a pressing force to be provided to urge the fruit and/or vegetable against the auger. With a conventional horizontal masticating separator the fruit or vegetable is fed into the chamber in a radial direction. Therefore, the fruit or vegetable is not urged towards the pressing portion 142 of the auger without a constant urging force being maintained by a user on the fruit or vegetable.

Once the housing 103 and auger 102 are assembled, the housing 103 and base unit 104 are then brought together. The housing 103 is received in the holder 150 so that the base unit 104 supports the housing 103. The holder 150 is formed on the upper side of the base unit 104, on an opposing side of the base unit 104 to the base surface 152. The pipe 118, acting as the juice outlet, is received in the extended portion of the holder 150. The pipe locates against the base unit 104 to orientate the housing 103 with respect to the base unit 104 about its longitudinal axis. The free end of the pipe 118 protrudes from the base unit 104. Therefore, separated juice flowing along the pipe 118 is able to flow into a juice container (not shown). The longitudinal axis of the pipe 118 extends at an acute angle to the base surface 152.

When the body 101 is assembled, the housing 103 is supported by the base unit 104 in a predetermined position. The auger 102 is therefore held in a desired orientation with respect to the body 101. The rotational axis of the auger 102 extends as an oblique angle to the base defined by the base unit 104. That is, the rotational axis of the auger 102 is neither perpendicular nor parallel to the base surface 152 which is configured to be positioned against a horizontal surface when the body 101 of the masticating separator 100 is positioned on the horizontal surface.

In the present embodiment, the rotational axis of the auger 102 extends at an angle of 30 degrees to the base surface 152. Preferably the angle between the rotational axis of the auger 102 and the plane of the base surface 152 is in the range of 15 degrees to 80 degrees.

When the masticating separator is operated, the auger 102 is rotatably driven by the motor (not shown) via the drive mechanism (not shown) so that the auger 102 rotates in the housing about its rotational axis. Fruit or vegetable fed into the chamber 106 through the opening 132 is chopped by the chopping portion 143 of the auger as described above. The fruit or vegetable is then urged to the pressing portion 142 of the auger 142 as the auger 102 rotates in the housing 103. The height of the helical screw 145 is constant along its length. The free edge of the helical screw 145 lies adjacent to the side wall 114 of the front portion 107.

As the auger 102 rotates, the helical blade 145 urges the combined pulp and juice along the cavity between the auger 102 and the front portion 107 of the housing 103.

As the auger 102 continues to rotate the combined pulp and juice is urged along the cavity towards the pulp outlet 116. However, although the width of the gap between the auger 102 and the housing 103 remains generally constant, it is recognized that the radius of the auger 102 decreases in the direction along the longitudinal axis of the auger 102 towards the pulp outlet 116. Therefore, the cross-sectional area of the cavity transverse to the axis, and the volume of the cavity along the longitudinal axis of the auger 102, decreases towards the front end of the housing 103. This causes the pressure imparted on the pulp and juice in the cavity to increase as the pulp and juice is urged along the cavity by the helical blade 145 of the auger 102. Therefore, although the pulp is constantly urged towards the open end of the housing 103 to be ejected through the pulp outlet 116, the increasing pressure causes the juice to flow in the opposite direction towards the sieve apertures 139 of the sieve 138, and the juice is then urged to flow through the sieve 138. The juice is urged through the sieve apertures 139 due to the reduced resistance to flow at the sieve apertures 139.

As the auger 102 continues to be rotated, the pulp continues to be urged towards the pulp outlet 116 and is ejected from the housing 103. Similarly, the juice is urged to flow along the through the sieve apertures 139. The juice then flows through the opening 117, acting as a juice outlet, formed through the front side wall 114 to be collected. The pulp is prevented from flowing through the sieve apertures 139 and so the pulp and juice are separated from each other.

When the desired amount of juice has been obtained, rotation of the auger 102 is stopped. The rear portion 108 of the housing is drawn away from the front portion 107 of the housing 103 and the auger 102 withdrawn. Therefore, it will be understood that the masticating separator is easily disassembled and the ease of cleaning the apparatus is maximized. Furthermore, it will be understood that the sieve 122 is separated from the juice outlet and so pulp fibres are easily removed from the sieve apertures 139. Therefore, the sieve is easily cleaned.

Many other modifications and variations will be evident to those skilled in the art.

Although in the above exemplary embodiment the opening, acting as a juice outlet, is formed through the front side wall 114, it will be understood that in an alternative arrangement the juice outlet is formed through the rear side wall 128. In such an arrangement, the sieve 122 may extend from the rear portion 108 to overlap and extend over the juice outlet when the front and rear portions 107, 108 are brought together.

Another embodiment of a masticating separator will now be described. It will be understood that features of the masticating separator described herein may also be used in combination with the features of the masticating separator described above.

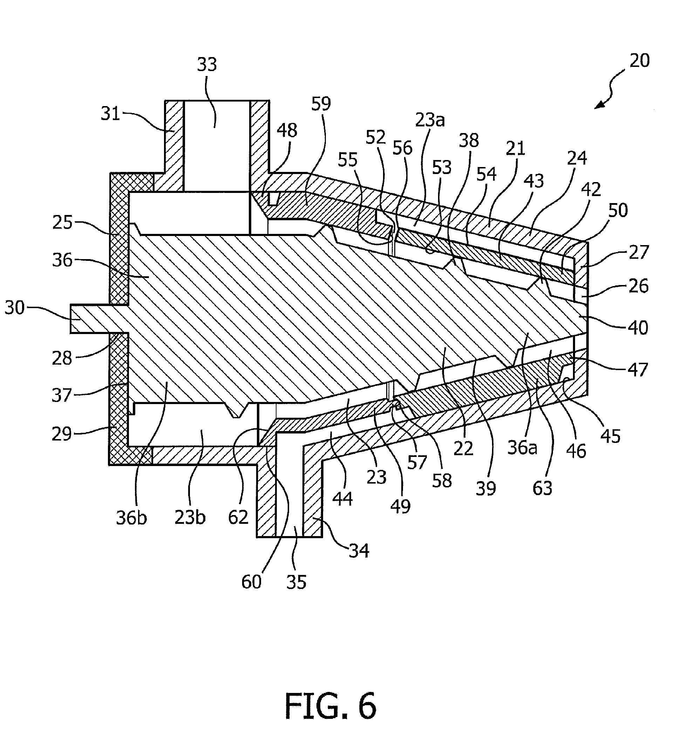

Referring now to Figure 6, a masticating separator 220, acting as a masticating juicer, for separating fruit or vegetable juice from pulp is shown. The masticating separator 220 comprising a body having a housing 221 and a rotatable auger 222 disposed in the housing 221. The body includes the housing 221 and a base unit (not shown). The rotatable auger 222 is received in the housing 221 and is rotatable therein. The housing 221 is removably mounted to the base unit (not shown). The base unit (not shown) supports the housing 221 and also orientates the housing 221 in its correct orientation for operation. Although the base unit and housing 221 are two separable parts in the present arrangement, it will be understood that the base unit and at least part of the housing 221 may be integrally formed.

A chamber 223 is formed in the body to receive the rotatable auger 222. The chamber 223 is in the housing 221. The housing 221 is separable into a front portion 224 and a rear portion 225 to allow access to the chamber 223, so that the auger 222 is removable from the housing 221 for cleaning, as will become apparent hereinafter.

The chamber 223 comprises a cylindrical section 223a and a conical portion 223b. A front end of the housing 221 is open to form a pulp outlet 226 through which pulp is discarded from the housing 221, as will become apparent hereinafter. The pulp outlet 226 is formed in an end wall 227 which communicates between the chamber 223 and outside the housing 221. A cylindrical hole 228 is formed through a rear wall 229 formed by the housing rear portion 225 through which a shaft 230 to drive the rotatable auger 222 extends.

A passage 231 is formed at an upper end of the housing 221. The passage 231 communicates with the chamber 223 proximate to the rear end of the housing 221 to act as an inlet 233 through which a fruit or vegetable is inserted into the chamber 223. Similarly, a pipe 234 extends from a lower end of the housing 221 to form a juice outlet 235, as will become apparent hereinafter, and communicates with the chamber 223 proximate to the junction between the cylindrical section 223a and conical portion 223b.

The auger 222 has an auger body 236 with a conical portion 236a and a cylindrical portion 236b extending from the end of the cylindrical portion 236a. The conical portion 236a acts as a pressing portion of the auger 222. The cylindrical portion 236b acts as a chopping portion of the auger 222. It will be understood that the portion acting as the pressing portion may not be conical and the portion of the auger acting as the chopping portion may not be cylindrical. The shaft 230 is fixedly mounted to the auger body 236 and extends from a rear end 237 of the auger body 236 along the longitudinal axis of the auger 222. The shaft 230 is driven by a motor (not shown) in a conventional manner, so that the shaft 230, and therefore the auger 222, is rotated when the motor is operated. A helical screw or blade 238 extends around an outer surface 239 of the auger body 236 from the rear end 237 to a front end 240. In this embodiment a free edge 242 of the helical blade 238 is spaced equidistant from the outer surface 239 of the auger body 236 along its length, however it will be appreciated that the height of the blade 238 may vary along its length.

An inner wall 243 is disposed in the housing 221. The inner wall 243 is removably received in the chamber 223, and extends along the conically-shaped portion 223b of the chamber 223 from the front end of the housing 221 and over the juice outlet 235. The inner wall 243 divides the chamber 223 in the housing 221 into a juice passageway 244 defined between the inner wall 243 and an inner surface 245 of the housing 221, and a cavity 246 defined between the inner wall 243 and the outer surface 239 of the auger body 236. A front end 247 of the inner wall 243 abuts the end wall 227 to form a seal therewith and a circumferential outwardly-extending flange 248 is formed at a rear end of the inner wall 243 and abuts against the inner surface 245 of the housing 221 to form a fluid seal therewith.

The juice passageway 244 extends circumferentially around the inner wall 243 and fluidly communicates with the juice outlet 235.

The inner wall 243 comprises a first part 249 and a second part 250. Each of the first and second parts 249, 250 is an insert which is removably received in the chamber 223 and together they form the inner wall 243. An elongate aperture 252 is formed between the first and second parts 249, 250, and extends arcuately around the inner wall 243. In this embodiment, the elongate aperture 252 extends circumferentially around the inner wall 243 and through the inner wall 243 from an inner face 253 to an outer face 254 so that the cavity 246 fluidly communicates with the juice passageway 244. The inner face 253 of the inner wall 243 is planar, such that it does not have any holes formed through it, with the exception of the aperture 252.

The first part 249 of the inner wall 243 has a planar end face 255 which is disposed adjacent to, but spaced from, a planar end face 256 of the second part 250 when the first and second parts 249, 250 are received in the housing 221.

Spacer elements 257 upstand from the first part end face 255. The spacer elements 257 act as a spacing means to space the first part end face 255 from the second part end face 256, as will become apparent hereinafter. The spacer elements 257 are disposed at regular intervals around the end face 255. Although the spacer elements upstand from the first part end face 255 and locate against the second part end face 256 in this embodiment, it will be appreciated that the spacer elements may extend from the second part end face 256 and locate against the first part end face 255. Alternatively, the first part may be spaced from the second part by a shoulder upstanding from the housing.

One or more of the spacer elements 257 has a locating key 258 protruding therefrom to receive a corresponding locating recess formed in the second part end face 256 to correctly position the first and second parts 255, 256 with respect to each other.

The first part 249 of the inner wall 243 is generally conically-shaped. Longitudinally extending ribs 259 extend radially from the outer face 254 of the first part 249 and are spaced around the first part 249 to abut against the inner surface 245 of the housing 221 and locate the first part 249 in the housing 221. Therefore, the outer face 253 of the first part is spaced from the inner surface 245 of the housing 221 to define the juice passageway 244. The flange 248 extends circumferentially around the first part 249 at an opposing end of the first part 249 to the end face 255 and a distal edge 260 of the flange 248 locates against the inner surface 245 of the housing 221 to form a seal there against. It will be appreciated that such a sealing arrangement prevents the flow of pulp between the housing 221 and the inner wall 243 and into the juice passageway 244. The flange 248 has an inclined face 262 which converges from the flange distal edge 260 to the inner wall inner face 253 to funnel juice and pulp into the cavity 246.

The second part 250 of the inner wall 243 is conically-shaped and extends parallel to the first part 249. It is disposed in the housing 221 between the first part 249 and the end wall 227 of the housing 221 and forms the circumferentially extending front end 247 of the inner wall which abuts against the end wall 227 to seal there against. Longitudinally extending ribs 263 extend radially from the outer face 254 of the second part 250 and are spaced around the second part 250 to abut against the inner surface 245 of the housing 221 and locate the second part 250 in the housing 221.

When the first and second parts 249, 250 are disposed in the housing 221 and located relative to each other, the opposing end faces 255, 256 of the two parts of the inner wall 243 are brought together such that they extend circumferentially parallel to, but spaced from, each other. The spacer elements 257 maintain a uniform spacing between the first and second parts 249, 250 so that the aperture 252 has a uniform spacing there around. In the present embodiment the minimum width of the aperture 252 determined by the minimum gap between the opposing end faces 255, 256 is approximately 0.3mm, although it will be appreciated that the width of the aperture 252 may be varied, for example the width of the aperture may be 0.1mm.

Although the opposing end faces 255, 256 are shown extending parallel to, but spaced from, each other it will be appreciated that in cross-section (as shown in Figure 6) the width of the gap of the aperture 252 between the opposing end faces 255, 256 may vary in a radial direction between the opening to the aperture 229 and an outer exit to the aperture 252, so that the width of the aperture 252 increases or decreases from the opening to the aperture 252 to the exit in a radial direction. The width of the aperture 252 from the opening to the exit in a radial direction may converge or diverge in a linear or non-linear manner, and so it will be understood that such cross-sectional increase or decrease in the width of the aperture may have a linear or non-linear mathematical function, as well as a continuous or discontinuous mathematical function. Alternatively, the aperture has a labyrinth arrangement in cross-section.

Although not shown in the Figures, in an alternative embodiment one or both of the inner edges of the first and second parts 249, 250 is inclined at an angle to the inner face 253 of the inner wall 243 and the end faces 255, 256 to form a converging mouth to the aperture 252 which extends circumferentially around the inner wall 243. An advantage of the funnel-shaped mouth is that it urges pulp fibres to converge towards the aperture 252 and so increases the efficiency of the cake filtration process.

When the juice separator is assembled, the inner wall 243 is received in the housing 221 and located in position so that the juice passageway 244 is defined, and the auger 222 is received in the housing 221, so that the cavity is defined. The auger 222 is rotatably mounted in the housing and the shaft 30 extends from the rear end of the housing 221 and is connected to a motor (not shown) or a manually operated handle (not shown).

The user then operates the juice separator so that the rotating auger body 236 is driven by the motor 225, or manually rotates the handle, so that the auger 222 rotates in the housing about its longitudinal axis.

The outer surface 239 of the auger 222 extends parallel to, but spaced from, the inner face 253 of the inner wall 243 along the longitudinal axis of the auger 222. Therefore the gap between the auger 222 and the inner wall 243 remains constant. However, it will be appreciated that in an alternative embodiment the gap between the auger 222 and the inner wall 243 may vary, for example by the outer surface 239 of the auger 222 converging towards the inner face 253 of the inner wall 243. The free edge 242 of the helical blade 238 lies adjacent to the inner wall 243.

A fruit or vegetable is inserted into the housing 221 through the passage 231 formed at an upper end of the housing 221 and is guided onto the auger 222. The fruit or vegetable is then crushed between the auger 222 and the housing 221 due to the rotating action of the helical blade 238 of the auger 222 acting on the fruit or vegetable to break the inserted fruit or vegetable down into combined pulp and juice. As the auger 222 is rotated the helical blade 238 urges the combined fruit or vegetable along the housing 221 and into the cavity 246 between the auger 222 and the inner wall 243. The combined pulp and juice is guided into the cavity 246 by the flange inclined face 262.

As the auger 222 continues to rotate the combined pulp and juice is urged along the cavity 246 towards the pulp outlet 226. However, although the width of the gap between the auger 222 and the inner wall 243 remains constant, it is recognized that the radius of the cavity 246 decreases in the direction along the longitudinal axis of the auger 222 towards the pulp outlet 226. Therefore, the cross-sectional area of the cavity 246 transverse to the axis, and the volume of the cavity 246 along the longitudinal axis of the auger 222 towards the front end of the housing 221, decreases. This causes the pressure imparted on the pulp and juice in the cavity 246 to increase as the pulp and juice is urged along the cavity 246 by the helical blade 238 of the auger 222. Therefore, although the pulp is constantly urged towards the open end of the housing 221 to be ejected from the cavity 246 through the pulp outlet 226, the increasing pressure in the cavity 246 causes the juice to flow in the opposite direction towards the aperture 252, and is urged to flow radially through the aperture 252 and into the juice passageway 244.

Therefore, the need for a sieve is eliminated and the arrangement of the masticating juicer is simplified in comparison to conventional masticating juicers.

As the auger 222 continues to be rotated, the pulp continues to be urged towards the pulp outlet and is ejected from the housing. Similarly, the juice is urged to flow along the cavity 246 in the opposite direction to the pulp and into the aperture 252. The juice then flows into the juice passageway 244 and can then easily flow through the juice outlet 235 at the base of the housing 221 to be collected. The pulp is prevented from flowing through the circumferentially extending aperture 252, however the juice is able to flow through the pulp along the aperture 252 and into the juice outlet 235. Therefore, the pulp and juice are separated from each other.

When the desired amount of juice has been obtained, rotation of the auger 222 is stopped. The rear portion 225 of the housing is separated from the front portion 224 of the housing 221 to allow access to the chamber 223, and the auger 222 can then be removed from the housing 221. Similarly, the inner wall 243 is removable from the housing 221 and the first and second parts 249, 250 are separable. Therefore, to clean the inner wall 243 and pulp fibres stuck in the aperture 252, the first part 249 is drawn away from the second part 250. Therefore, the opposing end faces 255, 256 of the first and second parts 249, 250 are separated and are able to be cleaned without a user needing to clean within the aperture itself.

Although in the above embodiment the first and second wall parts are located and mounted in the chamber by ribs and flanges, it will be appreciated that the masticating separator is not limited thereto and that the first and second wall parts may located and mounted by other means.

Although the inner wall 243 is formed from two insert parts which are spaced from each other to form an aperture in the inner wall in the above embodiment, it will be appreciated that the arrangement of the masticating separator is not limited thereto. For example, in an alternative embodiment the first and second parts are integrally formed such that the inner wall is formed as a single insert with an aperture formed therein. However, an advantage of the first and second parts being formed as two distinct parts is that they can be separated to allow the aperture to be easily cleaned and to prevent pulp from being retained in the aperture during cleaning.

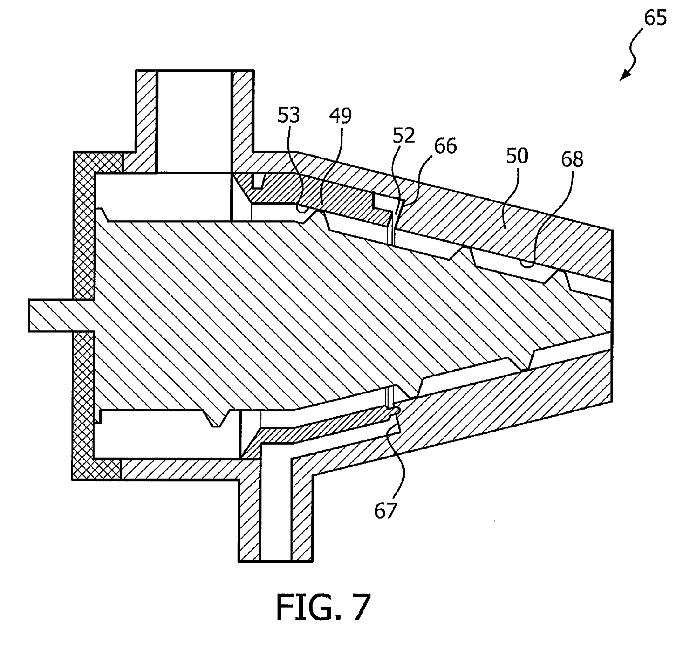

Alternatively, one of the parts may be integrally formed in the housing. Referring to Figure 7, an alternative embodiment of a masticating separator 265 is described. This embodiment is generally the same as the above described embodiment, and a detailed description will be omitted herein and components and features will retain the same reference numerals. However, in the present embodiment the second part of the inner wall 243 is integrally formed with the housing 221.

In this embodiment, the second part 250 of the inner wall 243 is integrally formed with the housing 221 and forms a shoulder 266 extending circumferentially around the inner surface 245 of the housing 221. Therefore, the end face 256 of the second part 250 is formed by the circumferentially extending end wall 267 of the shoulder 266. When the first part 249 is inserted into the housing 221 the spacing elements 257 abut against the end wall of the shoulder 266 to space the end face 255 of the first part 249 from the shoulder 266 to define the aperture 252. The cavity 246 is then defined between a conical face 268 of the shoulder 266 and the outer surface 239 of the auger 222 and the inner face 253 of the first part 249 and the auger 222. It will be appreciated that the juice passageway 244 is formed between the outer face 254 of the first part 249 and the housing 221.

In the above described embodiments the aperture 252 is disposed at, or proximate to, the distal end of the inner wall 243 to the pulp outlet 226. An advantage of this arrangement is that only a very small amount of juice is retained in the cavity 246 at the end of the juicing operation.

However, it will be appreciated that the aperture 252 may be moved further along the inner wall so that it is disposed further in the cavity. An advantage of this arrangement is that the pressure in the cavity 246 increases along the cavity 246 towards the pulp outlet 226 and so the further along the cavity 246 towards the pulp outlet 226, the higher the pressure to urge the juice through the aperture 252.

Although in the above described embodiments the auger 222 is shown with the rotational axis of the auger 222 extends horizontally, it will be understood that when the housing 221 is supported by the base unit (not shown), the auger 222 is held in a desired orientation with respect to the body such that the rotational axis of the auger 222 extends as an oblique angle to the base defined by the base unit (not shown). That is, the rotational axis of the auger 222 is neither perpendicular nor parallel to the base which is configured to be positioned against a horizontal surface when the body of the masticating separator is positioned on a horizontal surface.

A detailed description is given above with respect to the above embodiments and so a detailed description of the arrangement will be omitted with respect to this embodiment.

Furthermore, although in the present embodiment, the rotational axis of the auger, which corresponds to the longitudinal axis of the auger, extends perpendicular to a side wall of a rear portion of the housing, it will be understood that in an alternative embodiment the rotational axis of the auger may extend at an oblique angle to the side wall of a rear portion of the housing. That is, the rear side wall is neither perpendicular nor parallel to the rotational axis of the auger.

Therefore, it will be understood that an opening of the inlet 233 through which a fruit or vegetable is inserted into the chamber 223 extends at an oblique angle to the rotational axis of the auger. One advantage of at least the portion of the side wall 128 in which the opening 132 is formed extending at an oblique angle to the rotational axis of the auger is that the area of the opening 132 is maximized. Therefore, the area of the opening 132 and the area of the passage 135 are maximized. This allows easier insertion of fruit and/or vegetables.

Another embodiment of a masticating separator will now be described. It will be understood that features of the masticating separator described herein may also be used in combination with the features of the masticating separator described above.

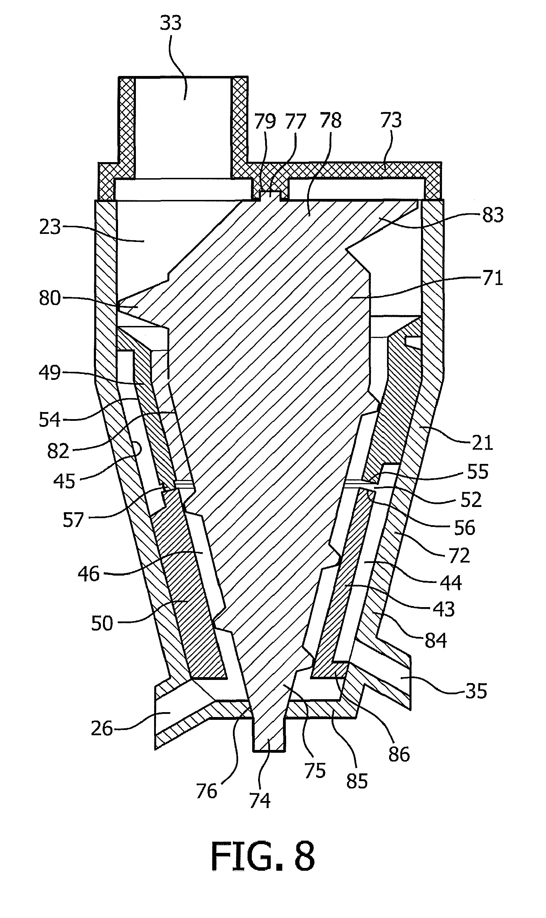

Referring to Figure 8, an alternative embodiment of a masticating separator 270 is described. This embodiment is generally the same as the above described embodiments, and a detailed description will be omitted herein and components and features will retain the same reference numerals.

The housing 221 has a lower portion 272 and an upper portion 273 which forms a cover. In this embodiment, the auger 271 is mounted on its longitudinal axis at each end by a shaft 274 at a lower end 275 of the auger 271 which extends through a corresponding shaft hole 276 formed through the housing 221, and a pin 277 at an upper end 278 received in a pin recess 279 formed in the upper portion 273 of the housing 221. The shaft 274 is mounted to and driven by a motor (not shown), or a manual handle, in a conventional manner to rotate the auger 271 in the housing 221 about its longitudinal axis.

The masticating separator 270 has a base (not shown) which is arranged to support the housing 221 on a horizontal surface (not shown) such as a table or bench. Therefore, it will be appreciated that when the base is positioned on a surface, the longitudinal axis of the auger extends perpendicularly to the surface. An advantage of the auger being disposed to rotate about a vertically extending axis is that it reduces the space required by the masticating separator 270. The masticating separator 270 comprising a body having a housing 221 and a rotatable auger 222 disposed in the housing 221. The body includes the housing 221 and a base unit (not shown). The rotatable auger 222 is received in the housing 221 and is rotatable therein. The housing 221 is removably mounted to the base unit (not shown). The base unit (not shown) supports the housing 221 and also orientates the housing 221 in its correct orientation for operation. Although the base unit and housing 221 are two separable parts in the present arrangement, it will be understood that the base unit and at least part of the housing 221 may be integrally formed.

Although in the above described embodiments the auger 222 is shown with the rotational axis of the auger 222 extending vertically, it will be understood that when the housing 221 is supported by the base unit (not shown), the auger 222 is held in a desired orientation with respect to the body such that the rotational axis of the auger 222 extends as an oblique angle to the base defined by the base unit (not shown). That is, the rotational axis of the auger 222 is neither perpendicular nor parallel to the base which is configured to be positioned against a horizontal surface when the body of the masticating separator is positioned on a horizontal surface.

A detailed description is given above with respect to the above embodiments and so a detailed description of the arrangement will be omitted with respect to this embodiment.

Furthermore, although in the present embodiment, the rotational axis of the auger, which corresponds to the longitudinal axis of the auger, extends parallel to a side wall of a rear portion of the housing, it will be understood that in an alternative embodiment the rotational axis of the auger may extend at an oblique angle to the side wall of a rear portion of the housing. That is, the rear side wall is neither perpendicular nor parallel to the rotational axis of the auger.

Therefore, it will be understood that an opening of the inlet 233 through which a fruit or vegetable is inserted into the chamber 223 extends at an oblique angle to the rotational axis of the auger. One advantage of at least the portion of the side wall 128 in which the opening is formed extending at an oblique angle to the rotational axis of the auger is that the area of the opening 132 is maximized. Therefore, the area of the opening 132 and the area of the passage 135 are maximized. This allows easier insertion of fruit and/or vegetables.

The auger 271 has a helical screw or blade 280 extending about an outer surface 282 of the auger 271, and an upper section 283 of the helical blade 280 at the upper end 278 forms a cutting tooth rotating below the fruit or vegetable inlet 233 to reduce a fruit or vegetable to combined pulp and juice.

The juice outlet 235 is formed through a side wall 284 of the housing 281 spaced from a base wall 285 of the housing 221. Similarly, the pulp outlet 226 is formed through the side wall 284 of the housing 281, but extends from the base wall 285 of the housing 221.

The inner wall 243 is generally the same as in the above described embodiments, however in this embodiment the inner wall 243 has a lower flange 286 extending circumferentially around a lower end 287 of the second part 250 of the inner wall 243. When the second part 250 of the inner wall 243 is inserted into the housing 221, the lower flange 286 locates against the inner surface 245 of the housing 221, along with the ribs 263, to locate the second part 250 in the housing 2276 so that it is spaced from the base wall 285. The lower flange 286 forms a fluid seal with the inner surface of the housing 221, and the juice outlet 235 extends from above an upper face of the lower flange 286 when the second part 250 is received in the housing 221. Therefore juice flowing in the juice passageway 244 formed between the housing 221 and the inner wall 243 flows into the juice outlet 235.

When the second part 250 of the inner wall 243 is disposed in the housing 221, the first part 249 is inserted into the housing 221 and is spaced from the second part 250 by the spacer elements 257 so that the aperture 252 is defined between the opposing end faces 255, 256 of the two parts of the inner wall 243. The flange 248 extending circumferentially about the first part 249 of the inner wall 243 forms an upper flange, such that the juice passageway 244 is defined between the outer face 254 of the inner wall 243, the inner surface 245 of the housing 221 and the upper and lower flanges. The auger 271 is then insertable into the housing 221 and its longitudinal axis extends at an oblique angle to a surface on which the base (not shown) of the masticating separator 270 is disposed, and the masticating separator is then operated in a similar manner to that described above. An advantage of the rotational axis of the auger 271 being arranged at an oblique angle to the base is that the masticating separator is able to use gravity to be used to let a fruit or vegetable to be fed through the masticating separator and for juice to flow from the housing.

Although in the above described embodiment the juice passageway 244 is defined at each end by upper and lower circumferentially extending flanges, it will be appreciated that the masticating separator is not limited thereto. For example, in another embodiment a circumferentially extending shoulder (not shown) may upstand from the lower end of the housing 21 against which the lower end of the second part of the inner wall abuts, with a bore formed through the shoulder to outside the housing to form the pulp outlet. Alternatively, or in addition to, the outer face of the first part of the inner wall abuts the inner surface of the housing such that the fluid passageway is formed between the second part of the inner wall and the inner surface of the housing.

Furthermore, although in the above embodiment the inner wall is formed from two distinct parts which are separable from each other, it will be appreciated that in an alternative embodiment the first and second parts 249, 250 of the inner wall 243 are integrally formed with each other. This aids removal of the inner wall 243 from the housing 221. However, an advantage of the first and second parts 249, 250 being separable is that it enables easy cleaning of the aperture 252.

Although in the above embodiments the outer surface 239 of the auger 222 extends parallel to, but spaced from, the inner face 253 of the inner wall 243 along the longitudinal axis of the auger 222 when the auger 222 is received in the housing 221, it will be appreciated that the arrangement of the masticating separator is not limited thereto. For example, in an alternative arrangement the outer surface 239 of the auger 222 and the inner face 253 of the inner wall 243 converge towards each other in a direction along the longitudinal axis of the auger 222 to the front end of the housing 221. This arrangement will further decrease the cross-sectional area of the cavity 246 and so a greater pressure will be imparted on the pulp and juice in the cavity 246 as the auger urges the pulp and juice along the cavity 246 towards the pulp outlet 226. Therefore, the juice in the cavity will be further urged back along the cavity 246 and to flow out of the cavity through the aperture 252. It will be appreciated in this arrangement that the free edge 242 of the helical blade 238 will converge towards the outer surface 239 of the auger 222 so that the free edge 242 of the helical blade 238 extends parallel to the inner wall 243.

Although the above exemplary embodiment relates to a masticating juicer for separating juice from pulp, it will be appreciated that the invention is not limited thereto and that such an above described apparatus may be used to separate other combined liquids and solids.

It will be appreciated that the term "comprising" does not exclude other elements or steps and that the indefinite article "a" or "an" does not exclude a plurality. A single processor may fulfill the functions of several items recited in the claims. The mere fact that certain measures are recited in mutually different dependent claims does not indicate that a combination of these measures cannot be used to an advantage. Any reference signs in the claims should not be construed as limiting the scope of the claims.

Although claims have been formulated in this application to particular combinations of features, it should be understood that the scope of the disclosure of the present invention also includes any novel features or any novel combinations of features disclosed herein either explicitly or implicitly or any generalization thereof, whether or not it relates to the same invention as presently claims in any claim and whether or not it mitigates any or all of the same technical problems as does the parent invention. The applicants hereby give notice that new claims may be formulated to such features and/or combinations of features during the prosecution of the present application or of any further application derived therefrom.

## Claims

1. A masticating separator for separating fruit or vegetable juice from fruit or vegetable pulp comprising a body (101) with a base configured to support the body on a horizontal surface, and an auger (102,222,271) rotatably mounted in the body about a rotational axis, wherein the rotational axis of the auger is configured to extend at an oblique angle to the base.

2. A masticating separator according to claim 1, wherein an opening (132) is formed in a side wall (114, 128) of the body (101) extending around the auger (102,222,271) to act as a fruit or vegetable inlet so that a fruit or vegetable is feedable to the auger, and at least the portion of the side wall in which the opening is formed extends at an oblique angle to the rotational axis of the auger.

3. A masticating separator according to claim 2, wherein the auger (102) comprises a chopping portion (143,236b) and a pressing portion (142,236a).

4. A masticating separator according to claim 3, wherein a cutting edge (148) of the chopping portion (143) extends at an oblique angle to the rotational axis of the auger (102).

5. A masticating separator according to claim 3, wherein the opening (132) is configured to face the chopping portion (143).

6. A masticating separator according to claim 1, wherein the body (101) further comprises an elongate passage (135) configured to feed a fruit or vegetable to the opening (132), the longitudinal axis of the elongate passage extending at an oblique angle to the rotational axis of the auger (102).

7. A masticating separator according to any preceding claim, wherein the base (104) is defined by a base surface (152).

8. A masticating separator according to claim 1 wherein the body (101) comprises a base unit (104) defining the base and a housing (103) mountable to the base unit.

9. A masticating separator according to claim 8, wherein the housing (103,221) comprises first and second portions (107,108,224,225) which are separable from each other.

10. A masticating separator according to claim 9, wherein the first portion (107) has a juice outlet (117), and the second portion (108) has a sieve (122) configured to extend over the juice outlet when the first and second portions are mounted to each other.

11. A masticating separator according to any of claims 1 to 9, further comprising an inner wall (243) in the body, a cavity (246) defined between an outer surface (239,282) of the auger (222,271) and the inner wall (243) to receive pulp and juice, and a juice passageway (244) separated from the cavity (246), wherein an elongate aperture (252) is formed in the inner wall (243) which extends between the cavity (246) and the juice passageway (244) so that, when the auger (222,271) is rotated about its longitudinal axis to urge pulp and juice along the cavity (246), juice in the cavity (246) is urged to flow through the aperture (252) to the juice passageway (244).

12. A masticating separator according to claim 11, wherein the elongate aperture (252) extends circumferentially around the inner wall (243).

13. A masticating separator according to claim 11, wherein the inner wall (243) comprises a first part (249) and a second part (250), the first and second parts (249, 250) being separable from each other along the aperture (252).

14. A masticating separator according to claim 13, wherein the first part (249) and/or the second part (250) is removably received in the housing (221).

15. A juicer for extracting fruit and or vegetable juice from pulp comprising a masticating separator according to any preceding claim.
